# FASCICULE DE BREVET EUROPEEN

(11) **EP 0 666 206 B1**
(45) Date de publication et mention de la délivrance du brevet: **21.10.1998**
(21) Numéro de dépôt: 95101289.7
(22) Date de dépôt: 31.01.1995
(51) Int. Cl.: B60S 1/18

(54) **Dispositif d'entraînement en rotation d'une bielle appartenant à une tringlerie d'entraînement d'un essuie-glace**
Vorrichtung zum rotatorischen Antrieb einer Gelenkstange eines Scheibenwischerantriebsgestänges
Device for rotational movement of a link rod of a windscreen wiper drive linkage

(30) Priorité: 03.02.1994 FR 9401207
(43) Date de publication de la demande: 09.08.1995
(73) Titulaire: VALEO SYSTEMES D'ESSUYAGE, 78180 Montigny-Le-Bretonneux (FR)
(72) Inventeur: Viaene, Alain, F-78180 Montigny-Le-Bretonneux (FR)
(74) Mandataire: Gamonal, Didier

(56) Documents cités:
- EP-A- 0 046 844
- DE-A- 3 908 293
- FR-A- 2 506 703

## Description

La présente invention concerne un mécanisme de transmission du type comportant un arbre tournant lié en rotation à une manivelle qui porte un maneton prévu pour être relié à une bielle.

L'invention concerne plus particulièrement un mécanisme de transmission dont la bielle appartient à une tringlerie de transmission de mouvement pour l'entraînement en rotation alternée d'un essuie-glace de véhicule automobile.

En utilisation, un essuie-glace effectue un mouvement de balayage alterné autour de son axe de balayage au cours duquel il décrit un secteur angulaire déterminé.

Les différents dispositifs et mécanismes de commande pour l'entraînement d'un essuie-glace permettent d'assurer une position d'arrêt fixe de l'essuie-glace à l'une des extrémités de sa course de balayage, position dans laquelle l'essuie-glace se trouve en regard de la portion vitrée à essuyer et à partir de laquelle il peut être actionné immédiatement pour effectuer un mouvement de balayage alternatif, intermittent ou continu.

Par contre, afin de dégager le champ de visibilité et de protéger l'essuie-glace, il est souhaitable de pouvoir amener ce dernier dans une position dite de parking dans laquelle il est effacé, cette position étant décalée angulairement par rapport à la position d'arrêt fixe.

On connaît différentes conceptions de dispositifs d'entraînement visant à assurer cette mise en position de parking de l'essuie-glace en provoquant une inversion du sens de rotation du moteur de l'installation d'essuie-glace et en agissant sur la tringlerie par des moyens complémentaires.

C'est notamment le cas du document FR-A-2.506.703 qui décrit et représente un dispositif qui comporte un triangle déformable comportant :
- a) une manivelle motrice dont la première extrémité est liée en rotation à l'arbre moteur ;
- b) une manivelle de transmission dont une première extrémité est articulée sur la seconde extrémité de la manivelle motrice et dont la seconde extrémité porte le maneton et un doigt de réaction qui s'étend parallèlement à l'axe d'articulation des deux manivelles l'une par rapport à l'autre ;
- c) une manivelle de réaction dont une première extrémité est montée tournante autour de l'arbre moteur et dont la seconde extrémité comporte une lumière de guidage fermée à ses deux extrémités dans laquelle est reçu le doigt de réaction; et
- d) des moyens pour permettre un déplacement relatif du doigt de réaction à l'intérieur de la lumière de guidage lorsque le sens de rotation de l'arbre moteur est inversé, lesdits moyens comportant des moyens de butée escamotables qui s'effacent lorsque la manivelle motrice tourne dans le sens normal de balayage de l'essuie-glace et qui empêchent la rotation de la manivelle de transmission lorsque la manivelle motrice tourne dans le sens opposé, pour la mise au parking de l'essuie-glace.

Dans ce document, les moyens pour permettre le déplacement relatif du doigt de réaction, et donc l'augmentation du rayon sur lequel se déplace le maneton, sont particulièrement complexes et font notamment appel à un cliquet formant levier qui est monté articulé sur la manivelle de réaction, et ces moyens nécessitent de plus d'arrêter l'arbre moteur dans une position angulaire précise, avant l'inversion du sens de rotation de celui-ci en vue de la mise au parking de l'essuie-glace, position dans laquelle une extrémité du cliquet de blocage de la manivelle de réaction doit se trouver en regard d'une encoche formée dans l'arbre moteur.

La présente invention a pour but de proposer un dispositif du type mentionné précédemment dont la conception des moyens de blocage soit particulièrement simple.

Dans ce but, l'invention propose un dispositif du type divulgué dans FR-A-2 506 703 caractérisé en ce que les moyens de butée sont réalisés par coopération du doigt de réaction avec une butée fixe.

Selon divers modes de réalisation de l'invention :
- la butée fixe comporte une rampe et une face latérale de butée, et le doigt de réaction est monté coulissant selon son axe entre une position sortie, dans laquelle il est susceptible de s'étendre en regard de la face latérale de butée, et une position escamotée vers laquelle il est repoussé par la rampe, à l'encontre de moyens élastiques de rappel du doigt de réaction vers sa position sortie ;
- la face latérale de butée comporte une encoche de positionnement du doigt de réaction qui détermine la position de parking de l'essuie-glace, et le dispositif comporte des moyens élastiques de rappel qui sollicitent le doigt de réaction vers l'une des deux extrémités de la lumière de guidage ;
- la surface latérale de butée est formée sur un organe de butée monté à rotation autour d'un axe parallèle au doigt de réaction et qui est mobile entre une position de repos et une position de blocage du doigt de réaction en position de parking de l'essuie-glace ;
- les moyens élastiques de rappel comportent un ressort de traction dont une extrémité est reliée à la seconde extrémité de la manivelle de transmission et dont l'autre extrémité est reliée à la première extrémité de la manivelle de réaction ;
- la lumière de guidage est sensiblement rectiligne et elle s'étend selon une direction radiale passant par l'axe d'articulation de la manivelle de transmission sur la manivelle motrice ;
- le doigt de réaction est coaxial au maneton.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée qui illustre de manière schématique les principaux composants du dispositif d'entraînement selon l'invention;
- la figure 2 est une vue de dessus du dispositif d'entraînement qui est illustré dans sa position normale d'entraînement de l'essuie-glace en un mouvement de balayage;
- les figures 3, 4 et 6 sont trois vues similaires à celle de la figure 2 qui illustrent les positions relatives successives des différents composants du dispositif lors de la mise en position de parking de l'essuie-glace;
- la figure 5 est une vue en section partielle selon la ligne 5-5 de la figure 4;
- la figure 7 d'une vue en section partielle selon la ligne 7-7 de la figure 6; et
- les figures 8 à 12 sont des vues similaires à celles des figures 2 à 6 et qui illustrent une variante de réalisation des moyens de butée.

Le dispositif illustré sur les figures est prévu pour être associé à un moto-réducteur d'entraînement d'un essuie-glace dont l'arbre moteur (non représenté) est monté à rotation par rapport à un support fixe (non représenté).

L'arbre d'entraînement peut être entraîné par le moteur du moto-réducteur dans deux sens de rotation opposés sous l'action d'une unité de commandes du fonctionnement des essuie-glace (non représenté).

Le dispositif d'entraînement 10 est pour l'essentiel constitué par un triangle déformable comportant une manivelle motrice 12, une manivelle de transmission 14 et une manivelle de réaction 16.

La première extrémité 12A de la manivelle motrice 12 comporte un tête d'entraînement 18 qui est prévue pour être liée en rotation à l'extrémité libre de l'arbre d'entraînement et elle peut, à cet effet, comporter un perçage conique (non représenté).

Le corps de la tête d'entraînement 18 est cylindrique.

La seconde extrémité 12B de la manivelle motrice 12 comporte un perçage 20 qui reçoit, avec interposition d'une douille 22, un axe 24 d'articulation de la première extrémité 14A de la manivelle de transmission 14.

La seconde extrémité 14B de la manivelle de transmission 14 porte un maneton 26 qui est réalisé sous la forme d'une sphère d'articulation 28 qui est prévue pour être reliée à une extrémité d'une bielle (non représentée) appartenant à la tringlerie pour l'entraînement en rotation alternée de balayage d'un essuie-glace (non représenté).

Le corps 30 du maneton 26 est monté serré dans un trou 32.

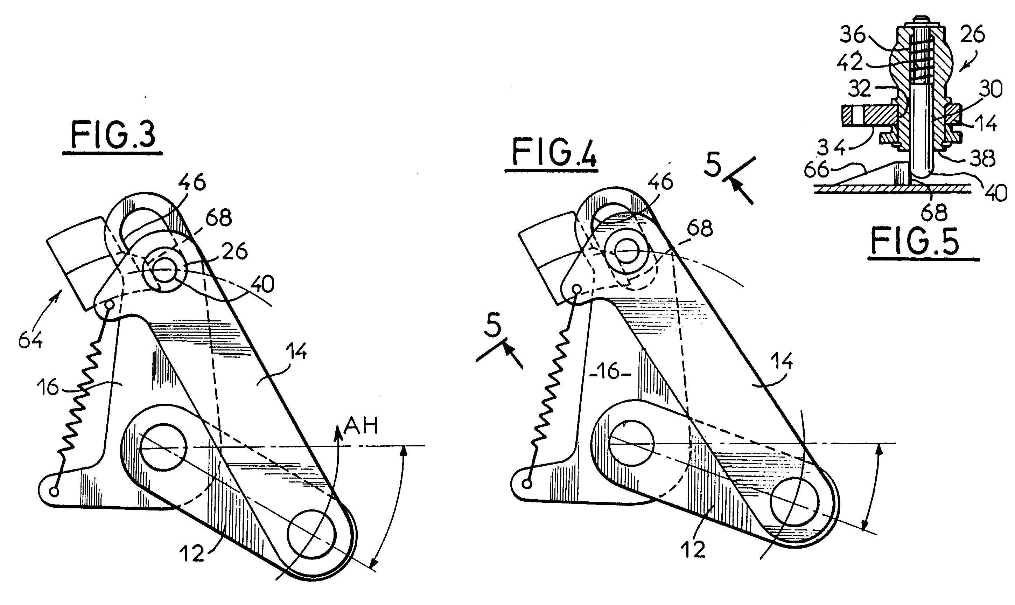

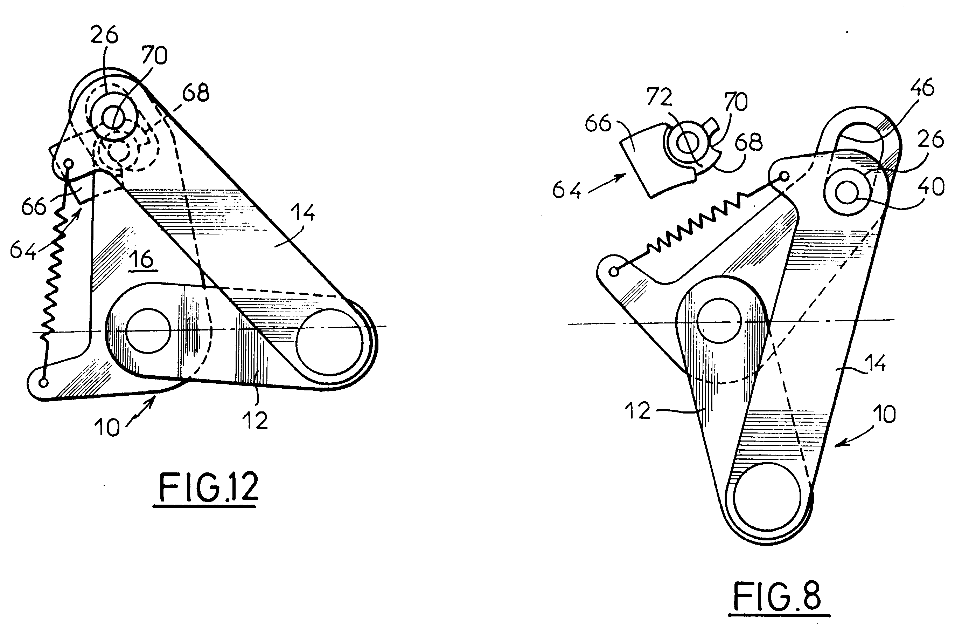

Comme cela est illustré de manière schématique sur les figures 5 et 7, le corps 30 du maneton 26 se prolonge axialement sous la face inférieure 34 de la manivelle de transmission 14 et il comporte un perçage axial 36 qui débouche axialement dans la face inférieure 38 du maneton.

Le perçage 36 reçoit en coulissement un doigt de guidage et de réaction 40 qui est illustré, sur les figures 5 et 7, dans une position sortie vers laquelle il est sollicité élastiquement par un ressort de compression 42 monté dans le perçage 36.

La première extrémité 16A de la manivelle de réaction 16 comporte un perçage 44 pour permettre son montage à rotation autour de la tête cylindrique d'entraînement 18 de la manivelle motrice 12, et permettre ainsi une rotation relative de la manivelle 16 par rapport à la manivelle 12.

La seconde extrémité 16B de la manivelle de réaction 16 comporte une lumière rectiligne de guidage 46 dont les deux extrémités opposées 48 et 50 sont arrondies et fermées.

La lumière de guidage 46 est prévue pour recevoir en coulissement le corps du doigt 40 qui est susceptible de se déplacer longitudinalement dans la lumière 46 entre ses deux extrémités opposées 48 et 50.

Le dispositif comporte également un ressort de traction 52 dont une première extrémité 54 est accrochée dans un trou 56 de la seconde extrémité 14B de la manivelle de transmission 14, et dont une seconde extrémité 58 est accrochée dans un trou 60 formé dans une patte 62 qui s'étend depuis la première extrémité 16A de la manivelle de réaction 16 en formant un angle aigu avec la direction générale de la manivelle 16.

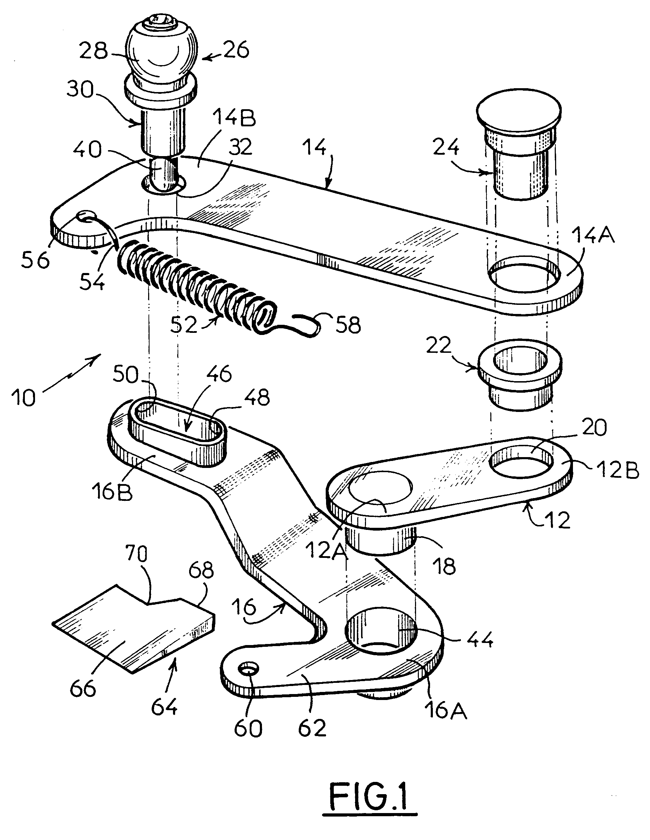

Enfin, on a également illustré de manière schématique sur la figure 1 une butée fixe 64, qui est par exemple associée à une platine 63 de support de l'ensemble du dispositif d'essuie-glace.

La butée fixe 64 est pour l'essentiel constituée par une rampe 66 et par une face latérale de butée 68.

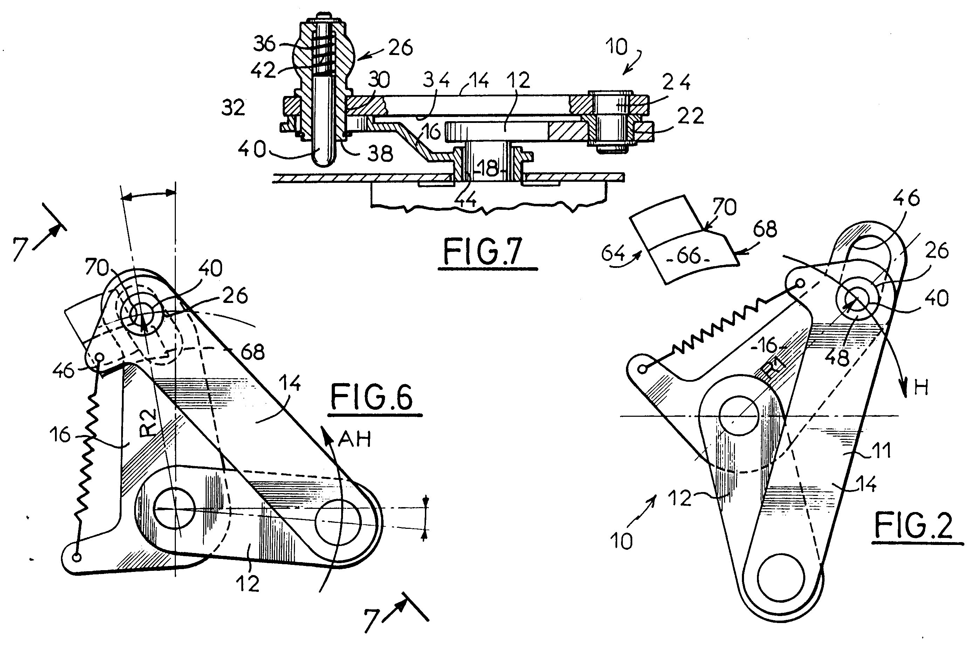

Un premier mode de réalisation de la butée fixe 64 est illustré en détails aux figures 2 à 6 sur lesquelles on peut constater que la face latérale de butée 68 comporte une encoche 70 dont la fonction sera expliquée par la suite.

On décrira maintenant le fonctionnement du dispositif 10.

En position normale de balayage, telle que le dispositif est illustré à la figure 2, la manivelle motrice 12 tourne dans le sens horaire indiqué par la flèche H et elle entraîne le maneton 26 dans le sens horaire, celui-ci décrivant un cercle de rayon R1.

Le corps du doigt 40 est en appui contre l'extrémité 48 de la lumière 46.

Lors de chaque passage sur la butée fixe 64, la rampe 66 provoque l'escamotage du doigt 40 à l'intérieur du perçage 36 du corps 30 du maneton 26.

Au cours de ce fonctionnement de balayage, la géométrie du triangle déformable est constante grâce à la présence du ressort de traction 52.

Lorsque l'utilisateur décide d'interrompre le fonctionnement de l'essuie-glace, l'unité de commande provoque l'arrêt en rotation du moteur dans une position angulaire déterminée de l'arbre d'entraînement, et donc de la manivelle motrice 12, par rapport à la butée fixe 64 dans laquelle le corps du doigt 40 est situé verticalement en regard de la portion correspondante de la face latérale de butée 68 de la butée fixe 64 (voir figure 3).

Lorsque cette position d'arrêt fixe est atteinte, l'unité de commande inverse le sens de rotation du moteur et l'arbre moteur entraîne alors angulairement la manivelle motrice 12 dans le sens anti-horaire indiqué par la flèche AH aux figures 3 à 6.

Du fait de la coopération du doigt de réaction 40 avec la face latérale de butée 68, la rotation en sens inverse provoque une déformation du triangle déformable et un déplacement du doigt 40 à l'intérieur de la lumière 46, jusqu'à atteindre la position maximale de déformation illustrée sur la figure 6 dans laquelle le corps du doigt 40 est dans l'encoche de blocage et de positionnement 70 de la face latérale de butée 68.

Dans cette position, le maneton est à une distance radiale R2 de l'axe de l'arbre moteur, ce nouveau rayon de mise au parking étant supérieur au rayon d'entraînement en rotation R1 et il provoque ainsi un déplacement angulaire complémentaire de l'essuie-glace, par rapport à sa position d'arrêt fixe (figure 3), jusqu'à sa position de parking (figure 6).

Dans la variante de réalisation de la butée fixe qui est illustrée sur les figures 8 à 12, les composants identiques ou similaires à ceux décris précédemment sont désignés par les mêmes chiffres de référence.

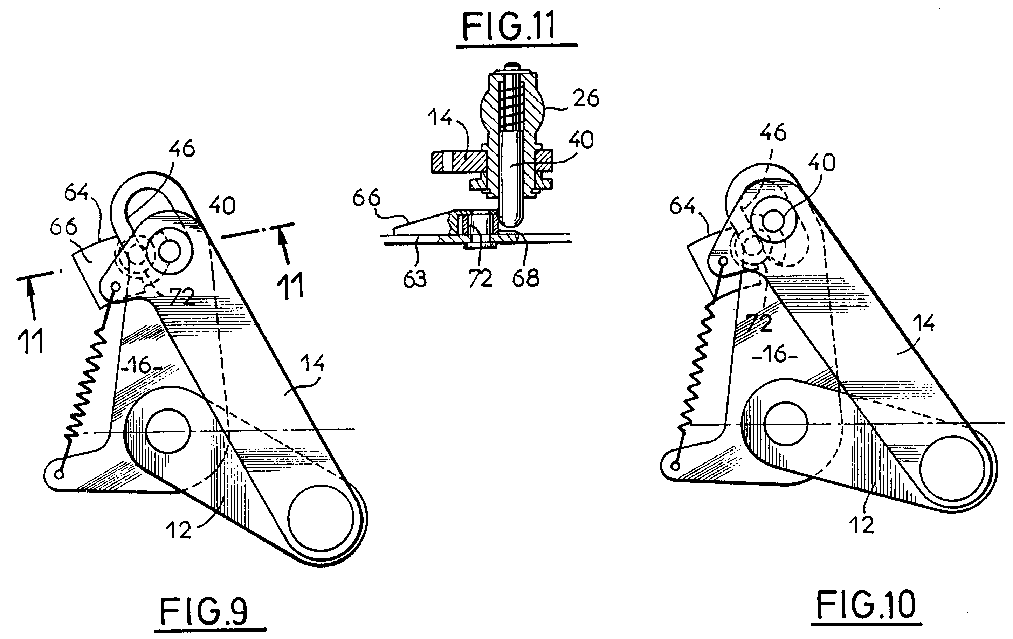

La butée fixe 64 comporte une rampe 66 mais la surface latérale de butée 68 est ici formée sur un organe de butée 72 qui est monté pivotant entre deux positions angulaires maximales illustrées aux figures 8 et 9.

La surface de butée latérale cylindrique 68 comporte un cran 70 prévu pour recevoir la paroi latérale du corps 40 du doigt de réaction associé au maneton 26 et l'organe rotatif 72 est sollicité élastiquement, par des moyens non représentés, vers sa position de repos illustrée à la figure 8.

Le fonctionnement du dispositif illustré aux figures 8 et 9 est en tous points identique à celui du dispositif décrit précédemment en référence aux figures 1 à 7.

## Revendications

1. Dispositif d'entraînement en rotation d'une bielle appartenant à une tringlerie de transmission de mouvement pour l'entraînement en rotation alternée d'un essuie-glace de véhicule automobile, du type comportant un arbre moteur à deux sens de rotation qui entraîne en rotation un maneton excentré prévu pour être relié à une extrémité de la bielle et du type dans lequel le dispositif comporte un triangle déformable comportant :
- a) une manivelle motrice (12) dont la première extrémité (12A) est liée en rotation à l'arbre moteur;
- b) une manivelle de transmission (14) dont une première extrémité (14A) est articulée sur la seconde extrémité (12B) de la manivelle motrice (12) et dont la seconde extrémité (14B) porte le maneton (26) et un doigt de réaction (40) qui s'étend parallèlement à l'axe d'articulation (24) des deux manivelles (12, 14) l'une par rapport à l'autre;
- c) une manivelle de réaction (16) dont une première extrémité (16A) est montée tournante autour de l'arbre moteur et dont la seconde extrémité (16B) comporte une lumière de guidage (46) fermée ses deux extrémités (48, 50) dans laquelle est reçu le doigt de réaction; et
- d) des moyens pour permettre un déplacement relatif du doigt de réaction (40) à l'intérieur de la lumière de guidage (46) lorsque le sens de rotation de l'arbre moteur est inversé, lesdits moyens comportant des moyens de butée escamotables qui s'effacent lorsque la manivelle motrice (12) tourne dans le sens normal de balayage de l'essuie-glace et qui empêchent la rotation de la manivelle de transmisssion (14) lorsque la manivelle motrice (12) tourne dans le sens opposé (AH), pour la mise au parking de l'essuie-glace, caractérisé en ce que les moyens de butée sont réalisés par coopération du doigt de réaction (40) avec une butée fixe (64).

2. Dispositif selon la revendication 1, caractérisé en se que la butée fixe (64) comporte une rampe (66) et une face latérale de butée (68), et en ce que le doigt de réaction (40) est monté coulissant selon son axe entre une position sortie, dans laquelle il est susceptible de s'étendre en regard de la face latérale de butée (68), et une position escamotée vers laquelle il est repoussé par la rampe, à l'encontre de moyens élastiques (42) de rappel du doigt de réaction (40) vers sa position sortie.

3. Dispositif selon la revendication 2, caractérisé en ce que la face latérale de butée (68) comporte une encoche (70) de positionnement du doigt de réaction (40) qui détermine la position de parking de l'essuie-glace, et en ce que le dispositif (10) comporte des moyens élastiques de rappel (52) qui sollicitent le doigt de réaction (40) vers l'une (48) des deux extrémités (48, 50) de la lumière de guidage (46).

4. Dispositif selon la revendication 3, caractérisé en ce que la surface latérale de butée (68) est formée sur un organe de butée (72) monté à rotation autour d'un axe parallèle au doigt de réaction (40) et qui est mobile en rotation entre une position de repos et une position de blocage du doigt de réaction en position de parking de l'essuie-glace.

5. Dispositif selon l'une des revendications 3 ou 4, caractérisé en ce que les moyens élastiques de rappel comportent un ressort de traction (52) dont une extrémité (54) est reliée à la seconde extrémité (14B) de la manivelle de transmission (14) et dont l'autre extrémité (58) est reliée à la première extrémité (16A) de la manivelle de réaction (16).

6. Dispositif selon l'une quelconque des revendications précédentes, caractérisé en ce que la lumière de guidage (46) est sensiblement rectiligne et s'étend selon une direction radiale passant par l'axe d'articulation de la manivelle de transmission (14) sur la manivelle motrice (12).

7. Dispositif selon l'une quelconque des revendications précédentes, caractérisé en ce que le doigt de réaction (40) est coaxial au maneton (26).

## Claims

1. A device for driving in rotation a crank of a motion transmitting linkage for driving a motor vehicle screen wiper in alternate rotation, of the type comprising a motor shaft with two directions of rotation which drives in rotation an eccentric crank pin which is arranged to be connected to one end of the crank, and of the type in which the device includes a deformable triangle comprising:
- (a) a connecting rod (12), the first end (12A) of which is coupled to the motor shaft in rotation;
- (b) a transmission rod (14), a first end (14A) of which is articulated on the second end (12B) of the connecting rod (12), its second end (14B) carrying the crank pin (26) and a reaction finger (40) which extends parallel to the axis (24) of articulation of the two rods (12, 14) with respect to each other;
- (c) a reaction rod (16), a first end (16A) of which is mounted rotatably about the motor shaft, its second end (16B) including a guide aperture (46) closed at its two ends (48, 50), in which the reaction finger is received; and
- (d) means for permitting relative displacement of the reaction finger (40) within the guide slot (46) when the direction of rotation of the motor shaft is reversed, the said means comprising retractable abutment means which are withdrawn when the connecting rod (12) rotates in the normal direction of wiping by the screen wiper, and which prevent rotation of the transmission rod (14) when the connecting rod (12) rotates in the opposite direction (AH), for parking the screen wiper, characterised in that the abutment means are defined by cooperation of the reaction finger (40) with a fixed abutment (64).

2. Apparatus according to Claim 1, characterised in that the fixed abutment (64) includes a ramp (66) and a lateral abutment face (68), and in that the reaction finger (40) is mounted for sliding movement along its axis between a deployed position, in which it is adapted to extend in facing relationship with the lateral abutment face (68), and a retracted position, towards which it is pushed by the ramp against resilient means (42) for returning the reaction finger (40) to its deployed position.

3. Apparatus according to Claim 2, characterised in that the lateral abutment face (68) has a notch (70) for positioning the reaction finger (40), which determines the parking position of the screen wiper, and in that the apparatus (10) includes resilient return means (52) which bias the reaction finger (40) towards one (48) of the two ends (48, 50) of the guide aperture (46).

4. Apparatus according to Claim 3, characterised in that the lateral abutment surface (68) is formed on an abutment member (72) which is mounted for rotation about an axis parallel to the reaction finger (40), and which is movable in rotation between a rest position and a position for blocking the reaction finger in the parking position of the screen wiper.

5. Apparatus according to Claim 3 or Claim 4, characterised in that the resilient return means comprise a tension spring (52), one end (54) of which is connected to the second end (14B) of the transmission rod (14), its other end (58) being connected to the first end (16A) of the reaction rod (16).

6. Apparatus according to any one of the preceding Claims, characterised in that the guide aperture (46) is substantially rectilinear, and extends in a radial direction passing through the axis of articulation of the transmission rod (14) on the connecting rod (12).

7. Apparatus according to any one of the preceding Claims, characterised in that the reaction finger (40) is coaxial with the crank pin (26).

## Patentansprüche

1. Vorrichtung zum Drehantrieb einer Gelenkstange, die zu einem Bewegungsübertragungsgestänge für den Pendeldrehantrieb eines Kraftfahrzeugscheibenwischers gehört, umfassend eine Antriebswelle mit zwei Drehrichtungen, die einen außermittigen Kurbelzapfen drehend antreibt, der für die Verbindung mit einem Ende der Gelenkstange vorgesehen ist, wobei die Vorrichtung ein verformbares Dreieck enthält, umfassend:
- a) eine Antriebskurbel (12), deren erstes Ende (12A) drehfest mit der Antriebswelle verbunden ist;
- b) eine Übertragungskurbel (14), deren erstes Ende (14A) am zweiten Ende (12A) der Antriebskurbel (12) angelenkt ist und deren zweites Ende (14B) den Kurbelzapfen (26) und einen Reaktionsfinger (40) trägt, der sich parallel zur Gelenkachse (24) für die Anlenkung der beiden Kurbeln (12, 14) im Verhältnis zueinander erstreckt;
- c) eine Reaktionskurbel (16), deren erstes Ende (16A) drehbar um die Antriebswelle gelagert ist und deren zweites Ende (16B) ein an seinen beiden Enden (48, 50) geschlossenes Führungslangloch (46) enthält, in das der Reaktionsfinger eingesetzt ist; und
- d) Mittel, um eine relative Bewegung des Reaktionsfingers (40) im Innern des Führungslanglochs (46) zu ermöglichen, wenn die Drehrichtung der Antriebswelle umgekehrt wird, wobei die besagten Mittel einziehbare Anschlagmittel umfassen, die versenkt werden, wenn sich die Antriebskurbel (12) in der normalen Wischrichtung des Scheibenwischers dreht, und die die Drehung der Übertragungskurbel (14) verhindern, wenn sich die Antriebskurbel (12) in der entgegengesetzten Richtung (AH) dreht, um den Scheibenwischer in die Parkstellung zu bringen, **dadurch gekennzeichnet,** daß die Anschlagmittel durch das Zusammenwirken des Reaktionsfingers (40) mit einem festen Anschlag (64) ausgeführt sind.

2. Vorrichtung nach Anspruch 1**, dadurch gekennzeichnet**, daß der feste Anschlag (64) eine Schräge (66) und eine seitliche Anschlagfläche (68) umfaßt und daß der Reaktionsfinger (40) entlang seiner Achse verschiebbar zwischen einer ausgefahrenen Position, in der er sich gegenüber der seitlichen Anschlagfläche (68) erstrecken kann, und einer eingefahrenen Position gelagert ist, zu der er durch die Schräge entgegen elastischen Mitteln (42) für die Rückstellung des Reaktionsfingers (40) zu seiner ausgefahrenen Position zurückgeschoben wird.

3. Vorrichtung nach Anspruch 2, **dadurch gekennzeichnet**, daß die seitliche Anschlagfläche (68) eine Ausklinkung (70) für die Positionierung des Reaktionsfingers (40) umfaßt, die die Parkstellung des Scheibenwischers bestimmt, und daß die Vorrichtung (10) elastische Rückstellmittel (52) umfaßt, die den Reaktionsfinger (40) zu einem (48) der beiden Enden (48, 50) des Führungslanglochs (46) hin beaufschlagen.

4. Vorrichtung nach Anspruch 3, **dadurch gekennzeichnet**, daß die seitliche Anschlagfläche (68) auf einem Anschlagorgan (72) ausgebildet ist, das drehbar um eine zum Reaktionsfinger (40) parallele Achse gelagert ist und das zwischen einer Ruheposition und einer Sperrposition des Reaktionsfingers in Parkstellung des Scheibenwischers beweglich ist.

5. Vorrichtung nach einem der Ansprüche 3 oder 4,**dadurch gekennzeichnet**, daß die elastischen Rückstellmittel eine Zugfeder (52) umfassen, von der ein Ende (54) mit dem zweiten Ende (14B) der Übertragungskurbel (14) verbunden ist und deren anderes Ende (58) mit dem ersten Ende (16A) der Reaktionskurbel (16) verbunden ist.

6. Vorrichtung nach einem der vorangehenden Ansprüche, **dadurch gekennzeichnet**, daß das Führungslangloch (46) in etwa geradlinig angeordnet ist und sich in einer radialen Richtung erstreckt, die durch die Gelenkachse für die Anlenkung der Übertragungskurbel (14) an der Antriebskurbel (12) verläuft.

7. Vorrichtung nach einem der vorangehenden Ansprüche, **dadurch gekennzeichnet**, daß der Reaktionsfinger (40) koaxial zum Kurbelzapfen (26) angeordnet ist.
